# EUROPÄISCHE PATENTANMELDUNG

(11) **EP 4 180 365 A1**
(43) Veröffentlichungstag der Anmeldung: **17.05.2023**
(21) Anmeldenummer: 22211221.1
(22) Anmeldetag: 28.03.2018
(51) Int. Cl.: B65G 47/08, B65G 47/84, B65G 54/02

(54) **VORRICHTUNG ZU EINEM AUSRICHTEN VON PRODUKTEN, INSBESONDERE ZU EINER BILDUNG VON REIHEN UND/ODER GRUPPEN AUS DEN PRODUKTEN**

(30) Priorität: 05.04.2017 DE 102017205773
(62) Teilanmeldung aus: 18714236.9
(71) Anmelder: Syntegon Packaging Systems AG, 8222 Beringen (CH)
(72) Erfinder: Wipf, Alfred, 79798 Jestetten (DE); Philipp, Kathan, 8200 Schaffhausen (CH)
(74) Vertreter: Daub, Thomas

(57) **Zusammenfassung**

Die Erfindung geht aus von einer Vorrichtung zu einem Ausrichten von, insbesondere mittels einer Transportvorrichtung (12) bewegten, Produkten (14), insbesondere zu einer Bildung von quer zu einer Haupttransportrichtung (16) der Transportvorrichtung (12) verlaufenden Reihen und/oder Gruppen aus den Produkten (14), mit zumindest einer Ausrichteinheit (18), die zumindest ein Ausrichtelement (20, 22, 24) aufweist, das zu einem Ausrichten der Produkte (14) in eine, insbesondere entlang der Haupttransportrichtung (16), zwischen zumindest zwei der Produkte (14) vorhandene Lücke einbringbar ist, mit zumindest einer als Linearmotorsystem ausgebildeten Ausrichtantriebseinheit (26) zumindest zu einem Antrieb des zumindest einen Ausrichtelements (20, 22, 24), die zumindest ein individuell geschwindigkeits- und/oder positionsgeregelt antreibbares Bewegungselement (28, 30, 32) aufweist, an dem das zumindest eine Ausrichtelement (20, 22, 24) angeordnet ist, und mit zumindest einer Sensoreinheit (42) zumindest zu einer Erfassung von zumindest einer zwischen zumindest zwei der Produkte (14) vorhandenen Lücke, wobei das zumindest eine Bewegungselement (28, 30, 32) in Abhängigkeit von der erfassten Lücke bewegbar ist.

Es wird vorgeschlagen, dass das zumindest eine Ausrichtelement (20, 22, 24) zumindest im Wesentlichen unbeweglich an dem zumindest einen Bewegungselement (28, 30, 32) angeordnet ist, wobei die Ausrichtantriebseinheit (26) zumindest eine, insbesondere endlose, Führungsbahn (44) aufweist, die zumindest einen Kreisbogen (46, 48) aufweist, wobei das zumindest eine Ausrichtelement (20, 22, 24) in Abhängigkeit von einer Bewegung des zumindest einen Bewegungselements (28, 30, 32) entlang des Kreisbogens (46, 48) in die zwischen zumindest zwei der Produkte (14) vorhandene Lücke einbringbar ist.

## Beschreibung

### Stand der Technik

Aus WO 2016/102117 A1 ist bereits eine Vorrichtung zu einem Ausrichten von, insbesondere mittels einer Transportvorrichtung bewegten, Produkten, insbesondere zu einer Bildung von quer zu einer Haupttransportrichtung der Transportvorrichtung verlaufenden Reihen und/oder Gruppen aus den Produkten, bekannt, wobei die bekannte Vorrichtung eine Ausrichteinheit, die zumindest ein Ausrichtelement aufweist, das zu einem Ausrichten der Produkte in eine zwischen zumindest zwei der Produkte vorhandene Lücke einbringbar ist, und eine Ausrichtantriebseinheit umfasst, die zu einem Antrieb des zumindest einen Ausrichtelements zumindest ein individuell geschwindigkeits- und/oder positionsgeregelt antreibbares Bewegungselement aufweist, an dem das zumindest eine Ausrichtelement angeordnet ist. Das zumindest eine Ausrichtelement ist bei der bekannten Vorrichtung infolge eines Zusammenwirkens des Bewegungselements mit einem weiteren Bewegungselement der Ausrichtantriebseinheit aktiv relativ zu dem zumindest einen Bewegungselement beweglich.

Des Weiteren sind aus DE 10 2011 075 178 A1, DE 10 2008 040 204 A1, WO 2014/195398 A2, WO 2014/108287 A1, EP 1 300 351 A1 ebenfalls bereits Vorrichtungen zu einem Ausrichten von Produkten bekannt.

Ferner ist aus EP 2 851 322 A2 eine Vorrichtung zu einem Ausrichten von Produkten bekannt, wobei die Vorrichtung zumindest eine Ausrichteinheit, die zumindest ein Ausrichtelement aufweist, das zu einem Ausrichten der Produkte in eine zwischen zumindest zwei der Produkte vorhandene Lücke einbringbar ist, zumindest eine als Linearmotorsystem ausgebildete Ausrichtantriebseinheit zumindest zu einem Antrieb des zumindest einen Ausrichtelements, die zumindest ein individuell geschwindigkeits- und/oder positionsgeregelt antreibbares Bewegungselement aufweist, an dem das zumindest eine Ausrichtelement angeordnet ist, wobei das zumindest eine Ausrichtelement mittels eines Zusammenwirkens mit einer Aktivierungseinheit der Ausrichteinheit aktiv relativ zu dem zumindest einen Bewegungselement beweglich ist, und zumindest eine Sensoreinheit zumindest zu einer Erfassung von zumindest einer zwischen zumindest zwei der Produkte vorhandenen Lücke umfasst, wobei das zumindest eine Ausrichtelement und/oder das zumindest eine Bewegungselement in Abhängigkeit von der erfassten Lücke bewegbar sind/ist.

### Offenbarung der Erfindung

Die Erfindung geht aus von einer Vorrichtung zu einem Ausrichten von, insbesondere mittels einer Transportvorrichtung bewegten, Produkten, insbesondere zu einer Bildung von quer zu einer Haupttransportrichtung der Transportvorrichtung verlaufenden Reihen und/oder Gruppen aus den Produkten, mit zumindest einer Ausrichteinheit, die zumindest ein Ausrichtelement aufweist, das zu einem Ausrichten der Produkte in eine, insbesondere entlang der Haupttransportrichtung, zwischen zumindest zwei der Produkte vorhandene Lücke einbringbar ist, mit zumindest einer als Linearmotorsystem ausgebildeten Ausrichtantriebseinheit zumindest zu einem Antrieb des zumindest einen Ausrichtelements, die zumindest ein individuell geschwindigkeits- und/oder positionsgeregelt antreibbares Bewegungselement aufweist, an dem das zumindest eine Ausrichtelement angeordnet ist, und mit zumindest einer Sensoreinheit zumindest zu einer Erfassung von zumindest einer zwischen zumindest zwei der Produkte vorhandenen Lücke, wobei das zumindest eine Bewegungselement in Abhängigkeit von der erfassten Lücke bewegbar ist.

Es wird vorgeschlagen, dass das zumindest eine Ausrichtelement zumindest im Wesentlichen unbeweglich an dem zumindest einen Bewegungselement angeordnet ist, wobei die Ausrichtantriebseinheit zumindest eine, insbesondere endlose, Führungsbahn aufweist, die zumindest einen Kreisbogen aufweist, wobei das zumindest eine Ausrichtelement in Abhängigkeit von einer Bewegung des zumindest einen Bewegungselements entlang des Kreisbogens in die zwischen zumindest zwei der Produkte vorhandene Lücke einbringbar ist. Die Aktivierungseinheit kann beispielsweise eine nutförmige Führungsbahn aufweisen, die mit zumindest einer am Ausrichtelement angeordneten Nocke der Aktivierungseinheit zusammenwirkt, als separate Antriebseinheit ausgebildet sein, wie beispielsweise als Magnetantriebseinheit, als Elektromotoreinheit, als Pneumatikantriebseinheit o. dgl., die an dem zumindest einen Bewegungselement und/oder an der Ausrichtantriebseinheit angeordnet ist, oder als eine andere, einem Fachmann als sinnvoll erscheinende Aktivierungseinheit. Die Aktivierungseinheit ist besonders bevorzugt verschieden von einem Scherengelenkmechanismus ausgebildet, der zu einer Bewegung des Ausrichtelements mit zumindest zwei, insbesondere an einer gemeinsamen Führungsbahn hintereinander angeordneten, Bewegungselementen der Ausrichtantriebseinheit zusammenwirkt. Vorzugsweise ist das zumindest eine Ausrichtelement als Ausrichtlineal, als Ausrichtschiene, als Ausrichtfortsatz o. dgl. ausgebildet. Bevorzugt ist das zumindest eine Ausrichtelement zu einer Bewegung in die zwischen zumindest zwei der Produkte vorhandene Lücke beweglich an dem zumindest einen Bewegungselement gelagert und bei Bedarf mittels der Aktivierungseinheit zur Einbringung in die Lücke aktiv bewegbar. Vorzugsweise kann das zumindest eine Ausrichtelement in zumindest einer Ausgestaltung der erfindungsgemäßen Vorrichtung zumindest im Wesentlichen unabhängig von einer Antriebsbewegung des zumindest einen Bewegungselements relativ zum Bewegungselement aktiv beweglich sein, insbesondere bei einer Ausgestaltung der Aktivierungseinheit mit einer an dem zumindest einen Bewegungselement angeordneten Antriebseinheit zu einer Bewegung des zumindest einen Ausrichtelements. Alternativ ist das zumindest eine Ausrichtelement vorzugsweise ortsfest, insbesondere starr, an dem zumindest einen Bewegungselement angeordnet. Bei einer alternativen Anordnung des zumindest einen Ausrichtelements an dem zumindest einen Bewegungselement ist das zumindest eine Ausrichtelement infolge eines Durchfahrens eines Kreisbogens einer Führungsbahn einer Führungseinheit der Ausrichtantriebseinheit in die Lücke einbringbar. Denkbar ist auch, dass das zumindest eine Ausrichtelement infolge eines Durchfahrens eines Kreisbogens einer Führungsbahn einer Führungseinheit der Ausrichtantriebseinheit zumindest teilweise in die Lücke einbringbar ist und mittels der Aktivierungseinheit, insbesondere bei einem Erreichen eines Ausrichtabschnitts der Führungsbahn, aktiv weiter in die Lücke bewegbar ist, insbesondere infolge einer Bewegung des zumindest einen Ausrichtelements relativ zu dem zumindest einen Bewegungselement.

Vorzugsweise sind mittels des zumindest einen Ausrichtelements aus mittels der Transportvorrichtung bewegten und weitestgehend ungeordneten einzelnen Produkten quer, insbesondere zumindest im Wesentlichen senkrecht, zur Haupttransportrichtung der Transportvorrichtung verlaufende Reihen und/oder Gruppen aus den Produkten bildbar. Die Produkte können kontinuierlich mittels der Transportvorrichtung angeliefert werden und beispielsweise mittels der Vorrichtung als Einzel-, Zwei- oder Mehrfachreihen ausrichtbar sein, die mittels der Transportvorrichtung kontinuierlich abtransportierbar sind. Denkbar ist auch, dass die Produkte kontinuierlich mittels der Transportvorrichtung angeliefert werden und, insbesondere nach einem Ausrichten mittels der Vorrichtung, intermittierender abtransportierbar sind. Ebenfalls denkbar ist auch, dass die Produkte, insbesondere in unausgerichteten Reihenmustern, auf Platten angeliefert werden, welche mittels der Vorrichtung entladen werden und dabei ausgerichtet werden, wobei insbesondere eine intermittierender Eingang von Produkten und ein kontinuierlicher Ausgang von Produkten an der Transportvorrichtung realisierbar ist. Ferner denkbar sind eine Anlieferung von Batches von Reihen an einem Eingang der Transportvorrichtung und ein Abtransport von Einzelreihen in konstantem Abstand am Ausgang der Transportvorrichtung. Weitere, einem Fachmann als sinnvoll erscheinende Zuliefer- und/oder Abtransportprozesse von Produkten sind ebenfalls denkbar. Bevorzugt ist die Vorrichtung Teil einer Produktions- und/oder Verpackungsmaschine und/oder Teil eines Produktions- und/oder Verpackungssystems. Die Transportvorrichtung, mittels derer Produkte entlang der Haupttransportrichtung bewegbar und/oder transportierbar sind, ist bevorzugt Teil der Produktions- und/oder Verpackungsmaschine. Vorzugsweise ist die Vorrichtung dazu vorgesehen, ungeordnete Produkte, insbesondere ungeordnete Produkte eines auf einem Förderelement angeordneten Produktteppichs, zu einer Bildung von quer zu einer Haupttransportrichtung der Transportvorrichtung verlaufenden Reihen und/oder Gruppen aus den Produkten auszurichten. Vorzugsweise ist die Vorrichtung, betrachtet entlang einer zumindest im Wesentlichen senkrecht zur Haupttransportrichtung verlaufenden Richtung, auf einer einer Bodenstandfläche der Transportvorrichtung abgewandten Seite der Transportvorrichtung, insbesondere oberhalb der Transportvorrichtung, angeordnet. Es ist jedoch auch denkbar, dass die Vorrichtung, betrachtet entlang einer zumindest im Wesentlichen senkrecht zur Haupttransportrichtung verlaufenden Richtung, seitlich neben der Transportvorrichtung angeordnet ist. Bei einer seitlichen Anordnung der Vorrichtung ist das zumindest eine Ausrichtelement bevorzugt derart an dem zumindest einen Bewegungselement angeordnet, dass das zumindest eine Ausrichtelement infolge einer Schwenkbewegung und/oder einer Linearbewegung in eine Lücke zwischen zumindest zwei Produkten einbringbar ist. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschlie-ßen und der Winkel eine maximale Abweichung von insbesondere kleiner als 8°, vorteilhaft kleiner als 5° und besonders vorteilhaft kleiner als 2° aufweist.

Unter einem "Produkt" soll insbesondere ein zu verpackender Gegenstand, insbesondere ein unverpackter Gegenstand, oder eine Packung, die zumindest einen Gegenstand enthält oder leer ist, verstanden werden, wie beispielsweise ein Karton, ein Behälter, ein Tray, ein Biskuit, ein Schokoriegel, eine Folienverpackung, wie beispielsweise ein Schlauchbeutel, o. dgl. Die Produkte können jegliche einem Fachmann als sinnvoll erscheinende Produktform aufweisen, wie beispielsweise eine runde, eine ovale, eine polygonale o. dgl. ausgebildete Produktform.

Vorzugsweise ist das zumindest eine Bewegungselement als Mover der Ausrichtantriebseinheit ausgebildet, der individuell geschwindigkeits- und/oder positionsgeregelt antreibbar ist. Vorzugsweise umfasst die Ausrichtantriebseinheit eine Vielzahl an Bewegungselementen, insbesondere Mover, die individuell, insbesondere unabhängig voneinander, geschwindigkeits- und/oder positionsgeregelt antreibbar sind. Bevorzugt umfasst die Ausrichtantriebseinheit zumindest die Führungseinheit, an der das zumindest eine Bewegungselement, insbesondere alle Bewegungselemente der Ausrichtantriebseinheit, beweglich gelagert sind. Die Führungseinheit ist bevorzugt als geschlossene Schleife ausgebildet. Vorzugsweise bildet die Führungseinheit eine endlose Führungsbahn für eine Vielzahl an der Führungseinheit angeordneten Bewegungselementen der Ausrichtantriebseinheit. Die Vielzahl an Bewegungselementen ist vorzugsweise umlaufend entlang der Führungsbahn bewegbar. Die Führungsbahn kann einen ovalen, einen runden, einen elliptischen oder einen anderen, einem Fachmann als sinnvoll erscheinenden und in sich geschlossenen Verlauf aufweisen. Es ist jedoch auch denkbar, dass die Führungseinheit eine andere, einem Fachmann als sinnvoll erscheinende Ausgestaltung aufweist, wie beispielsweise eine Ausgestaltung mit einem endlichen Verlauf der Führungsbahn, der beispielsweise gerade, mäanderartiger, gebogen o. dgl. ausgebildet sein kann. Bei einem endlichen Verlauf der Führungsbahn ist zumindest ein an der Führungseinheit angeordnetes Bewegungselement beispielsweise von einem Ende der Führungsbahn zu einem weiteren Ende der Führungsbahn bewegbar, insbesondere hin- und hergehend bewegbar. Die Fördereinheit ist bevorzugt derart ausgebildet, dass eine Bewegung der Vielzahl an Bewegungselementen mittels einer magnetischen, insbesondere elektromagnetischen, Ausgestaltung der Ausrichtantriebseinheit erfolgt.

Die Vorrichtung umfasst vorzugsweise zumindest eine elektromagnetische Ausrichtantriebseinheit zu einer Bewegung des zumindest einen Bewegungselements, insbesondere der Vielzahl an Bewegungselementen, entlang der Führungsbahn der Führungseinheit. Es ist jedoch auch denkbar, dass die Vielzahl an Bewegungselementen mittels einer anders ausgebildeten Antriebseinheit bewegbar sind, wie beispielsweise mittels einer Luftpolsterantriebseinheit o. dgl. Vorteilhaft ist die Ausrichtantriebseinheit als Linearantriebseinheit, insbesondere als Linearmotorsystem, ausgebildet. Bevorzugt umfasst das Linearmotorsystem zumindest entlang der Führungsbahn der Führungseinheit einen Stator und eine Vielzahl unabhängig antreibbarer Translatoren, die dazu vorgesehen sind, die Bewegungselemente unabhängig voneinander anzutreiben. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Linearmotorsystem" soll in diesem Zusammenhang ein System verstanden werden, welches zumindest einen Stator und eine Vielzahl entlang des Stators antreibbarer beweglicher Translatoren aufweist. Der Stator kann sich entlang einer Geraden, aber auch entlang einer Kurve und/oder einer Kreisbahn erstrecken. Bevorzugt folgt der Stator der Führungsbahn der Führungseinheit. Der Stator kann als Sekundärteil, bevorzugt als Primärteil, des Linearmotorsystems ausgebildet sein. Bevorzugt weist der Stator zumindest abschnittsweise unabhängig ansteuerbare Statorwicklungen auf. Ein magnetisches Wanderfeld kann für jeden im Einflussbereich des Stators befindlichen Translator unabhängig erzeugt werden. Die Translatoren können unabhängig angetrieben werden. Die Translatoren können als Primärteile, bevorzugt als Sekundärteile, des Linearmotorsystems ausgebildet sein. Bevorzugt weisen die Translatoren Permanentmagnete auf. Die Translatoren können passiv ausgebildet sein. Bewegte Leitungen zur Stromführung zu den Translatoren können entfallen. Bevorzugt weist das Linearmotorsystem Weg- und/oder Positionsmessmittel auf, die dazu vorgesehen sind, die Positionen und/oder Geschwindigkeiten der Translatoren relativ zum Stator zu messen. Bevorzugt ist eine Steuereinheit der Ausrichtantriebseinheit dazu vorgesehen, Position und/oder Geschwindigkeit der Translatoren zu steuern und/oder zu regeln. Solche Linearmotorsysteme mit unabhängig antreibbaren Translatoren sind dem Fachmann bekannt, wie beispielsweise aus der WO 2016/102117 A1. Insbesondere sind zumindest zwei Translatoren an zumindest einem Bewegungselement angeordnet.

Bevorzugt ist jeweils ein Translator zum Antrieb eines Bewegungselements vorgesehen. Eine Vielzahl von Translatoren kann entlang des Stators unabhängig antreibbar sein. Mechanische und/oder elektrische bewegte Mittel, wie insbesondere Kabel und/oder Antriebsriemen oder Antriebsketten, zum Antrieb der Translatoren können entfallen. Entlang einer Strecke können mehrere Statoren, bevorzugt senkrecht zur Haupttransportrichtung nebeneinander, angeordnet sein. Die Statoren können jeweils dazu vorgesehen sein, eine Teilmenge der Translatoren der Strecke anzutreiben. Bevorzugt können die Translatoren entlang der Haupttransportrichtung abwechselnd einem der Statoren zugeordnet sein. Ein einzuhaltender Mindestabstand der Translatoren in Haupttransportrichtung kann reduziert sein. Insbesondere können die Translatoren senkrecht zur Haupttransportrichtung nebeneinander angeordnet sein, so dass sich die Translatoren in Haupttransportrichtung überlappen können. Ferner ist auch denkbar, dass die Translatoren übereinander angeordnet sind oder die Translatoren getrennt von dem zumindest einen Bewegungselement ausgebildet sind und/oder in einer parallel zur Führungsbahn angeordneten Antriebsbahn angeordnet sind, um die Bewegungselemente anzutreiben, die an der Führungsbahn beweglich angeordnet sind. In einer alternativen Ausgestaltung können mehrere Translatoren, insbesondere zwei, zum Antrieb des zumindest einen Bewegungselements vorgesehen sein. Insbesondere kann das zumindest eine Bewegungselement mehrteilig ausgebildet sein und die an zumindest einem Bewegungselement angeordneten Translatoren können unterschiedliche Teile des zumindest einen Bewegungselements antreiben. Die Translatoren können eine Relativbewegung von Teilen des zumindest einen Bewegungselements zueinander antreiben. Die Translatoren können unabhängig von den Bewegungselementen an Führungsmitteln gelagert sein. Eine Bahn, entlang derer die Translatoren bewegt werden, kann von der Führungsbahn, entlang derer die Bewegungselemente bewegt werden, abweichen. Bevorzugt können die Translatoren an den Bewegungselementen angeordnet oder gelagert sein. Führungsmittel zur Lagerung der Translatoren können entfallen. Bevorzugt können von Permanentmagneten gebildete Translatoren fest mit den Bewegungselementen verbunden sein. Vorzugsweise sind zumindest zwei Permanentmagnete an einem Bewegungselement angeordnet. Es ist jedoch auch denkbar, dass eine von zwei abweichende Anzahl an Permanentmagnete an einem einzelnen Bewegungselement angeordnet ist.

Mittels der erfindungsgemäßen Ausgestaltung kann vorteilhaft eine präzise Ausrichtung von ungeordneten Produkten, insbesondere innerhalb eines Produktionsprozesses einer Produktions- und/oder Verpackungsmaschine, zur Bildung von quer zur Haupttransportrichtung der Transportvorrichtung verlaufenden Reihen und/oder Gruppen aus den Produkten realisiert werden. Es können vorteilhaft gleichmäßige Reihenabstände zwischen einzelnen Reihen von Produkten ermöglicht werden. Es kann vorteilhaft konstruktiv einfach eine individuelle Anpassung von einzelnen Reihenabständen zwischen einzelnen Reihen von Produkten ermöglicht werden. Es kann vorteilhaft eine Pufferfunktion realisiert werden, um beispielsweise eine Aufstauung von einzelnen Reihen zu einer Erzeugung einer gleichmäßigen Reihenverteilung zu ermöglichen. Es kann eine vorteilhafte Mitbewegung des zumindest einen Ausrichtelements mit den mittels der Transportvorrichtung bewegten Produkten erreicht werden.

Unter einer "Sensoreinheit" soll insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensoreinheiten denkbar. Die Sensoreinheit kann beispielsweise als optoelektronische Sensoreinheit, insbesondere Lichtschrankensensoreinheit, o. dgl. ausgebildet sein. Bevorzugt umfasst die Sensoreinheit zumindest ein Sensorelement, insbesondere ein optoelektronisches Sensorelement, wie beispielsweise eine Lichtschranke, o. dgl., zu einer Erfassung von zumindest einer zwischen zumindest zwei der Produkte vorhandenen Lücke. Die Sensoreinheit kann zumindest teilweise an der Ausrichtantriebseinheit, an der Führungseinheit und/oder an der Transportvorrichtung angeordnet sein. Insbesondere kann zumindest ein Sensorelement der Sensoreinheit an der Führungseinheit und/oder an der Transportvorrichtung angeordnet sein. Es ist jedoch auch denkbar, dass die Sensoreinheit zumindest teilweise an dem zumindest einen Bewegungselement und/oder an dem zumindest einen Ausrichtelement angeordnet ist. insbesondere kann zumindest ein Sensorelement der Sensoreinheit an dem zumindest einen Bewegungselement und/oder an dem zumindest einen Ausrichtelement angeordnet sein. Weitere, einem Fachmann als sinnvoll erscheinende Anordnungen der Sensoreinheit, insbesondere zumindest eines Sensorelements der Sensoreinheit, sind ebenfalls denkbar. Vorzugsweise umfasst die Vorrichtung zumindest eine Steuer- und/oder Regeleinheit, die dazu vorgesehen ist, eine Bewegung des zumindest einen Bewegungselements und/oder des zumindest einen Ausrichtelements in Abhängigkeit von einer mittels der Sensoreinheit erfassten Lücke zwischen zumindest zwei der Produkte zu steuern und/oder zu regeln. Vorzugsweise ist das zumindest eine Ausrichtelement infolge einer Erfassung einer Lücke zwischen zumindest zwei der Produkte in die Lücke bewegbar. Bevorzugt ist eine Bewegung des zumindest einen Ausrichtelements in eine Lücke bei einem Ausbleiben einer Erfassung einer Lücke, insbesondere einer Lücke von mehr als 5 mm, bevorzugt von mehr als 10 mm und besonders bevorzugt von mehr als 15 mm, zwischen zumindest zwei der Produkte mittels der Steuer- und/oder Regeleinheit unterbindbar. Mittels der erfindungsgemäßen Ausgestaltung kann vorteilhaft eine zuverlässige Bewegung des zumindest einen Ausrichtelements in eine zwischen zumindest zwei der Produkte vorhandene Lücke erreicht werden. Es kann eine vorteilhafte Reihen- und/oder Gruppenbildung von Produkten aus einem ungeordneten Produktteppich realisiert werden. Es kann vorteilhaft eine präzise Ausrichtung von ungeordneten Produkten, insbesondere innerhalb eines Produktionsprozesses einer Produktions- und/oder Verpackungsmaschine, zur Bildung von quer zur Haupttransportrichtung der Transportvorrichtung verlaufenden Reihen und/oder Gruppen aus den Produkten realisiert werden.

Alternativ, insbesondere nicht erfindungsgemäß, ist denkbar, dass das zumindest eine Ausrichtelement translatorisch und/oder rotatorisch, insbesondere schwenkbar, beweglich an dem zumindest einen Bewegungselement gelagert ist. Vorzugsweise umfasst die Vorrichtung zumindest eine Lagereinheit, insbesondere eine Linearlagereinheit und/oder eine Schwenklagereinheit, mittels derer das zumindest eine Ausrichtelement beweglich an dem zumindest einen Bewegungselement gelagert ist. Vorzugsweise verläuft eine Bewegungsachse des zumindest einen Ausrichtelements bei einer translatorisch und/oder rotatorisch, insbesondere schwenkbar, beweglichen Lagerung des zumindest einen Ausrichtelements an dem zumindest einen Bewegungselement quer, insbesondere zumindest im Wesentlichen senkrecht, zur Haupttransportrichtung. Bevorzugt verläuft die Bewegungsachse des zumindest einen Ausrichtelements bei einer rotatorisch, insbesondere schwenkbar, beweglichen Lagerung des zumindest einen Ausrichtelements an dem zumindest einen Bewegungselement zumindest im Wesentlichen senkrecht zu einer Bewegungsebene des zumindest einen Bewegungselements. Bevorzugt wird die Bewegungsebene durch einen Verlauf der Führungsbahn der Führungseinheit definiert. Vorzugsweise verläuft eine Bewegungsachse des zumindest einen Ausrichtelements bei einer translatorisch beweglichen Lagerung des zumindest einen Ausrichtelements an dem zumindest einen Bewegungselement zumindest im Wesentlichen parallel zur Bewegungsebene des zumindest einen Bewegungselements. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Die Aktivierungseinheit ist vorzugsweise dazu vorgesehen, zu einer Bewegung des zumindest einen Ausrichtelements relativ zu dem zumindest einen Bewegungselement mit der Lagereinheit zusammenzuwirken. Vorzugsweise umfasst die Lagereinheit zumindest ein Lagerbolzenelement, mittels dessen das zumindest eine Ausrichtelement schwenkbar an dem zumindest einen Bewegungselement beweglich gelagert ist. Insbesondere umfasst die Aktivierungseinheit zumindest einen als Nocke ausgebildeten Fortsatz, der zumindest in einer Position des zumindest einen Bewegungselements und/oder des zumindest einen Ausrichtelements in eine Führungsschiene oder eine Führungsbahn der Aktivierungseinheit eingreift. Die Führungsschiene oder die Führungsbahn ist vorzugsweise als Kurvenbahn ausgebildet. Es ist jedoch auch denkbar, dass zumindest ein Antriebselement, wie beispielsweise ein Elektromotor, ein Magnetantrieb o. dgl., an dem zumindest einen Bewegungselement angeordnet ist, das dazu vorgesehen ist, das zumindest eine Ausrichtelement aktiv relativ zum Bewegungselement zu bewegen. Weitere, einem Fachmann als sinnvoll erscheinende Ausgestaltungen einer Lagerung und/oder eines Antriebs des zumindest einen Ausrichtelements zu einer Bewegung des zumindest einen Ausrichtelements relativ zu dem zumindest einen Bewegungselement sind ebenfalls denkbar. Es kann vorteilhaft eine konstruktiv einfache Bewegungsmöglichkeit des zumindest einen Ausrichtelements in eine zwischen zumindest zwei der Produkte vorhandene Lücke erreicht werden. Es kann eine vorteilhafte Reihen- und/oder Gruppenbildung von Produkten aus einem ungeordneten Produktteppich realisiert werden. Es kann vorteilhaft eine präzise Ausrichtung von ungeordneten Produkten, insbesondere innerhalb eines Produktionsprozesses einer Produktions- und/oder Verpackungsmaschine, zur Bildung von quer zur Haupttransportrichtung der Transportvorrichtung verlaufenden Reihen und/oder Gruppen aus den Produkten realisiert werden.

Alternativ, insbesondere nicht erfindungsgemäß, ist denkbar, dass die Ausrichteinheit eine Vielzahl an Ausrichtelementen aufweist, die beweglich an dem zumindest einen Bewegungselement angeordnet sind. Vorzugsweise sind an dem zumindest einen Bewegungselement mehr als ein Ausrichtelement, insbesondere mehr als zwei Ausrichtelemente, der Ausrichteinheit angeordnet. Die Vielzahl an Ausrichtelementen ist bevorzugt mittels des zumindest einen Bewegungselements entlang der Führungsbahn der Führungseinheit bewegbar. Es kann vorteilhaft eine hohe Effizienz ermöglicht werden. Es können vorteilhaft mehrere Ausrichtelemente pro Bewegungselement, insbesondere pro Bewegungselementpaar, bewegbar an der Führungseinheit angeordnet werden, um insbesondere eine geringe Anzahl von Bewegungselementen zur Bewegung der Ausrichtelemente entlang der Führungsbahn der Führungseinheit zu ermöglichen. Es können vorteilhaft Kosten eingespart werden, da eine mittels einer geringen Anzahl an Bewegungselementen eine Vielzahl an Ausrichtelementen entlang der Führungsbahn der Führungseinheit bewegbar sind. Es kann eine vorteilhafte Reihen- und/oder Gruppenbildung von Produkten aus einem ungeordneten Produktteppich realisiert werden. Es kann vorteilhaft eine präzise Ausrichtung von ungeordneten Produkten, insbesondere innerhalb eines Produktionsprozesses einer Produktions- und/oder Verpackungsmaschine, zur Bildung von quer zur Haupttransportrichtung der Transportvorrichtung verlaufenden Reihen und/oder Gruppen aus den Produkten realisiert werden.

Alternativ, insbesondere nicht erfindungsgemäß, ist denkbar, dass die an dem zumindest einen Bewegungselement angeordneten Ausrichtelemente einzeln und/oder gemeinsam bewegbar sind. Bevorzugt sind die Ausrichtelemente, die an dem zumindest einen Bewegungselement angeordnet sind, unabhängig voneinander und/oder gemeinsam relativ zu dem zumindest einen Bewegungselement beweglich an dem zumindest einen Bewegungselement gelagert, insbesondere translatorisch und/oder rotatorisch, insbesondere schwenkbar, beweglich gelagert. Vorzugsweise umfasst die Ausrichteinheit eine Bewegungskopplungseinheit, die dazu vorgesehen ist, die Vielzahl an Ausrichtelementen, die an dem zumindest einen Bewegungselement angeordnet ist, unabhängig voneinander und/oder gemeinsam relativ zu dem zumindest einen Bewegungselement zu bewegen. Insbesondere ist es denkbar, dass die Vorrichtung Einzelantriebseinheiten aufweist, die dazu vorgesehen sind, einzelne Ausrichtelemente der Vielzahl an Ausrichtelementen, die an dem zumindest einen Bewegungselement angeordnet sind, unabhängig voneinander relativ zu dem zumindest einen Bewegungselement zu bewegen. Alternativ oder zusätzlich ist es denkbar, dass die Vorrichtung zumindest eine Kopplungsantriebseinheit aufweist, die dazu vorgesehen ist, eine Vielzahl an Ausrichtelementen, die an dem zumindest einen Bewegungselement angeordnet sind, gemeinsam relativ zu dem zumindest einen Bewegungselement zu bewegen, wie beispielsweise mittels einer Verbindung der Vielzahl an Ausrichtelementen mittels eines Zahnradkoppelgetriebes, eines Stangenkoppelgetriebes o. dgl. Es können vorteilhaft mehrere Ausrichtelemente pro Bewegungselement, insbesondere pro Bewegungselementpaar, individuell und/oder gemeinsam bewegt werden, um eine hohe Flexibilität der Vorrichtung zu ermöglichen. Es kann vorteilhaft eine hohe Effizienz ermöglicht werden. Es können vorteilhaft mehrere Ausrichtelemente pro Bewegungselemente, insbesondere pro Bewegungselementpaar, bewegbar an der Führungseinheit angeordnet werden, um insbesondere eine geringe Anzahl von Bewegungselementen zur Bewegung der Ausrichtelemente entlang der Führungsbahn der Führungseinheit zu ermöglichen. Es können vorteilhaft Kosten eingespart werden, da eine mittels einer geringen Anzahl an Bewegungselementen eine Vielzahl an Ausrichtelementen entlang der Führungsbahn der Führungseinheit bewegbar sind. Es kann eine vorteilhafte Reihen- und/oder Gruppenbildung von Produkten aus einem ungeordneten Produktteppich realisiert werden. Es kann vorteilhaft eine präzise Ausrichtung von ungeordneten Produkten, insbesondere innerhalb eines Produktionsprozesses einer Produktions- und/oder Verpackungsmaschine, zur Bildung von quer zur Haupttransportrichtung der Transportvorrichtung verlaufenden Reihen und/oder Gruppen aus den Produkten realisiert werden.

Des Weiteren wird vorgeschlagen, dass dem zumindest einen Ausrichtelement, insbesondere jedem Ausrichtelement der Ausrichteinheit, weniger als vier, insbesondere maximal zwei, Bewegungselemente der Ausrichtantriebseinheit zugeordnet sind. Vorzugsweise sind dem zumindest einen Ausrichtelement oder der Vielzahl an Ausrichtelementen, die an dem zumindest einen Bewegungselement angeordnet ist, zumindest ein weiteres Bewegungselement zugeordnet. Bevorzugt ist das zumindest eine Ausrichtelement mit einem Ende an dem zumindest einen Bewegungselement angeordnet und mit zumindest einem weiteren Ende an zumindest einem weiteren Bewegungselement der Ausrichtantriebseinheit angeordnet. Insbesondere sind dem zumindest einem Ausrichtelement maximal zwei Bewegungselemente der Ausrichtantriebseinheit zu einer Bewegung entlang der Führungsbahn der Führungseinheit zugeordnet. Bevorzugt bildet das zumindest eine Bewegungselement und das zumindest eine weitere Bewegungselement ein Bewegungselementpaar, das dazu vorgesehen ist, das Ausrichtelement entlang der Führungseinheit zu bewegen. Bevorzugt umfasst die Ausrichtantriebseinheit eine Vielzahl an Bewegungselementpaaren, wobei jedem Bewegungselementpaar zumindest ein Ausrichtelement oder eine Vielzahl an Ausrichtelementen zugeordnet ist. Mittels der erfindungsgemäßen Ausgestaltung können vorteilhaft Kosten eingespart werden, da eine mittels einer geringen Anzahl an Bewegungselementen eine Vielzahl an Ausrichtelementen entlang der Führungsbahn der Führungseinheit bewegbar sind. Es kann eine vorteilhafte Reihen- und/oder Gruppenbildung von Produkten aus einem ungeordneten Produktteppich realisiert werden. Es kann vorteilhaft eine präzise Ausrichtung von ungeordneten Produkten, insbesondere innerhalb eines Produktionsprozesses einer Produktions- und/oder Verpackungsmaschine, zur Bildung von quer zur Haupttransportrichtung der Transportvorrichtung verlaufenden Reihen und/oder Gruppen aus den Produkten realisiert werden.

Das zumindest eine Ausrichtelement und/oder die Vielzahl an Ausrichtelementen sind/ist, insbesondere in zumindest einer Ausgestaltung der Vorrichtung, unbeweglich an dem zumindest einen Bewegungselement angeordnet, so dass eine Bewegung des zumindest einen Ausrichtelements und/oder der Vielzahl an Ausrichtelementen in eine zwischen zumindest zwei der Produkte vorhandene Lücke in Abhängigkeit von einer Bewegung des zumindest einen Bewegungselements entlang des Kreisbogens, insbesondere in Abhängigkeit von einer Kurvenfahrt des zumindest einen Bewegungselements erfolgt. Mittels der erfindungsgemä-ßen Ausgestaltung kann vorteilhaft eine Einsparung von zusätzlich an dem zumindest einen Bewegungselement angeordneten Bewegungsmechanismen zu einer Bewegung des zumindest einen Ausrichtelements in eine Lücke hinein vermieden werden. Es können vorteilhaft Kosten eingespart werden.

Ferner geht die Erfindung aus von einem Verfahren zu einem Ausrichten von Produkten, insbesondere zu einer Bildung von quer zu einer Haupttransportrichtung verlaufenden Reihen und/oder Gruppen aus Produkten, insbesondere mittels einer erfindungsgemäßen Vorrichtung, wobei in zumindest einem Verfahrensschritt mittels zumindest einer, insbesondere der, Sensoreinheit die zumindest eine zwischen zumindest zwei der Produkte vorhandene Lücke erfasst wird, wobei in zumindest einem Verfahrensschritt das zumindest eine Bewegungselement in Abhängigkeit von der erfassten Lücke bewegt wird. Es wird vorgeschlagen, dass in zumindest einem Verfahrensschritt zu einer Bewegung zumindest eines Ausrichtelements einer Ausrichteinheit in eine zwischen zumindest zwei der Produkte vorhandene Lücke das zumindest eine Ausrichtelement in Abhängigkeit von einer Bewegung des zumindest einen Bewegungselements entlang eines Kreisbogens einer Führungsbahn der Ausrichtantriebseinheit in die zwischen zumindest zwei der Produkte vorhandene Lücke bewegt wird. Mittels der erfindungsgemäßen Ausgestaltung kann vorteilhaft eine präzise Ausrichtung von ungeordneten Produkten, insbesondere innerhalb eines Produktionsprozesses einer Produktions- und/oder Verpackungsmaschine, zur Bildung von quer zur Haupttransportrichtung der Transportvorrichtung verlaufenden Reihen und/oder Gruppen aus den Produkten realisiert werden. Es können vorteilhaft gleichmäßige Reihenabstände zwischen einzelnen Reihen von Produkten ermöglicht werden. Es kann vorteilhaft konstruktiv einfach eine individuelle Anpassung von einzelnen Reihenabständen zwischen einzelnen Reihen von Produkten ermöglicht werden. Es kann vorteilhaft eine Pufferfunktion realisiert werden, um beispielsweise eine Aufstauung von einzelnen Reihen zu einer Erzeugung einer gleichmäßigen Reihenverteilung zu ermöglichen. Es kann eine vorteilhafte Mitbewegung des zumindest einen Ausrichtelements mit den mittels der Transportvorrichtung bewegten Produkten erreicht werden. Mittels der erfindungsgemäßen Ausgestaltung kann vorteilhaft eine zuverlässige Bewegung des zumindest einen Ausrichtelements in eine zwischen zumindest zwei der Produkte vorhandene Lücke erreicht werden. Es kann eine vorteilhafte Reihen- und/oder Gruppenbildung von Produkten aus einem ungeordneten Produktteppich realisiert werden. Es kann vorteilhaft eine präzise Ausrichtung von ungeordneten Produkten, insbesondere innerhalb eines Produktionsprozesses einer Produktions- und/oder Verpackungsmaschine, zur Bildung von quer zur Haupttransportrichtung der Transportvorrichtung verlaufenden Reihen und/oder Gruppen aus den Produkten realisiert werden.

Die erfindungsgemäße Vorrichtung und/oder das erfindungsgemäße Verfahren sollen/soll hierbei nicht auf die oben beschriebene Anwendung und Ausführungsform beschränkt sein. Insbesondere können/kann die Vorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten. Zudem sollen alle Merkmale, die hinsichtlich der erfindungsgemäßen Vorrichtung offenbart werden, auch als zum erfindungsgemäßen Verfahren offenbart gelten und umgekehrt.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Produktions- und/oder Verpackungsmaschine mit zumindest einer erfindungsgemäßen Vorrichtung in einer schematischen Darstellung,
- Fig. 2: eine Detailansicht der erfindungsgemäßen Vorrichtung in einer schematischen Darstellung, insbesondere mit nicht erfindungsgemäßen beweglich an Bewegungselementen gelagerten Ausrichtelementen,
- Fig. 3: eine Detailansicht einer Ausrichtantriebseinheit und einer Aktivierungseinheit einer Ausrichteinheit der erfindungsgemäßen Vorrichtung in einer schematischen Darstellung insbesondere mit nicht erfindungsgemäßen beweglich an Bewegungselementen gelagerten Ausrichtelementen,
- Fig. 4: eine mögliche Reihenbildungsfunktion aus einem ungeordneten Produktteppich mittels der erfindungsgemäßen Vorrichtung in einer schematischen Darstellung, insbesondere mit nicht erfindungsgemäßen an Bewegungselementen beweglich gelagerten Ausrichtelementen,
- Fig. 5: eine, insbesondere bevorzugte, weitere mögliche Reihenbildungsfunktion aus einem ungeordneten Produktteppich mittels der erfindungsgemäßen Vorrichtung in einer schematischen Darstellung, insbesondere mit erfindungsgemäßen unbeweglich an Bewegungselementen angeordneten Ausrichtelementen,
- Fig. 6: eine weitere mögliche Reihenbildungsfunktion aus einem ungeordneten Produktteppich mittels der erfindungsgemäßen Vorrichtung in einer schematischen Darstellung, insbesondere mit nicht erfindungsgemäßen beweglich an Bewegungselementen gelagerten Ausrichtelementen,
- Fig. 7: eine Draufsicht auf einen ungeordneten Produktteppich, wobei mittels eines Einbringens von Ausrichtelementen der Ausrichteinheit der erfindungsgemäßen Vorrichtung Reihen bildbar sind, in einer schematischen Darstellung,
- Fig. 8: eine Detailansicht der erfindungsgemäßen Vorrichtung in einem Zusammenspiel mit einer Aussortiereinheit der Produktions- und/oder Verpackungsmaschine in einer schematischen Darstellung.

### Beschreibung des Ausführungsbeispiels

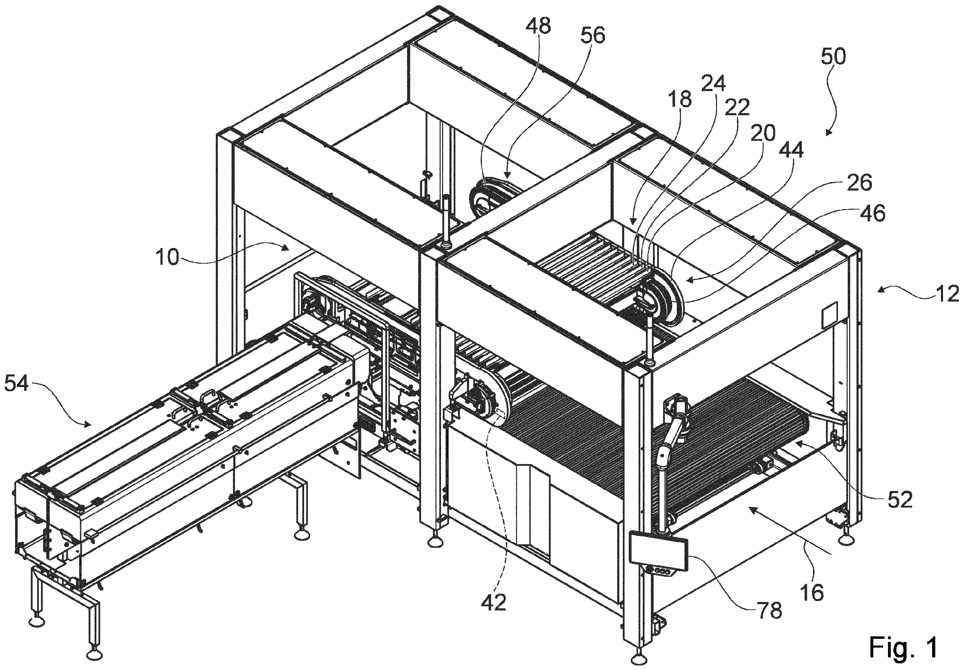

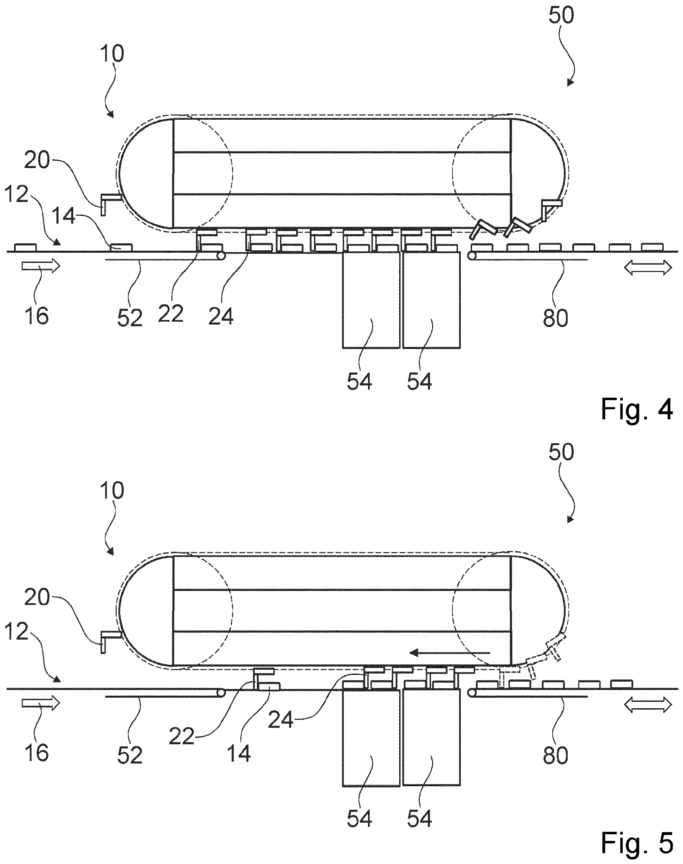

Figur 1 zeigt eine Produktions- und/oder Verpackungsmaschine 50 mit zumindest einer Transportvorrichtung 12 und mit zumindest einer Vorrichtung 10 zu einem Ausrichten von, insbesondere mittels der Transportvorrichtung 12 bewegten, Produkten 14 (vgl. Figuren 4 bis 8). Die Vorrichtung 10 überspannt die Transportvorrichtung 12 zumindest teilweise, insbesondere betrachtet entlang einer quer, insbesondere zumindest im Wesentlichen senkrecht, zu einer Haupttransportrichtung 16 der Transportvorrichtung 12 verlaufenden Richtung. Die Transportvorrichtung 12 weist zumindest eine Zufuhreinheit 52, insbesondere zumindest ein Zufuhrförderband, zu einer Zuführung von, insbesondere ungeordneten Produkten 14 zur Vorrichtung 10 auf. Die Produkte 14 sind vorzugsweise mittels der Zufuhreinheit 52 als ungeordneter Produktteppich der Vorrichtung 10 zu einer Bildung von quer zur Haupttransportrichtung 16 der Transportvorrichtung 12 verlaufenden Reihen und/oder Gruppen aus den Produkten 14 zuführbar. Ferner weist die Transportvorrichtung 12 zumindest eine Abfuhreinheit 54, insbesondere eine Querabfuhreinheit, zumindest zu einer Abführung von mittels der Vorrichtung 10 ausgerichteten Produkten 14 auf. Die Produkte 14 sind bevorzugt als mittels der Vorrichtung 10 gebildete Reihen und/oder Gruppen mittels der Abfuhreinheit 54 weitertransportierbar. Die mittels der Abfuhreinheit 54 von der Vorrichtung 10 abgeführten Produkte 14 sind vorzugsweise zu einer weiteren Verarbeitung einem weiteren Produktionsprozess der Produktions- und/oder Verpackungsmaschine 50 zuführbar, wie beispielsweise einem Verpackungsprozess o. dgl.

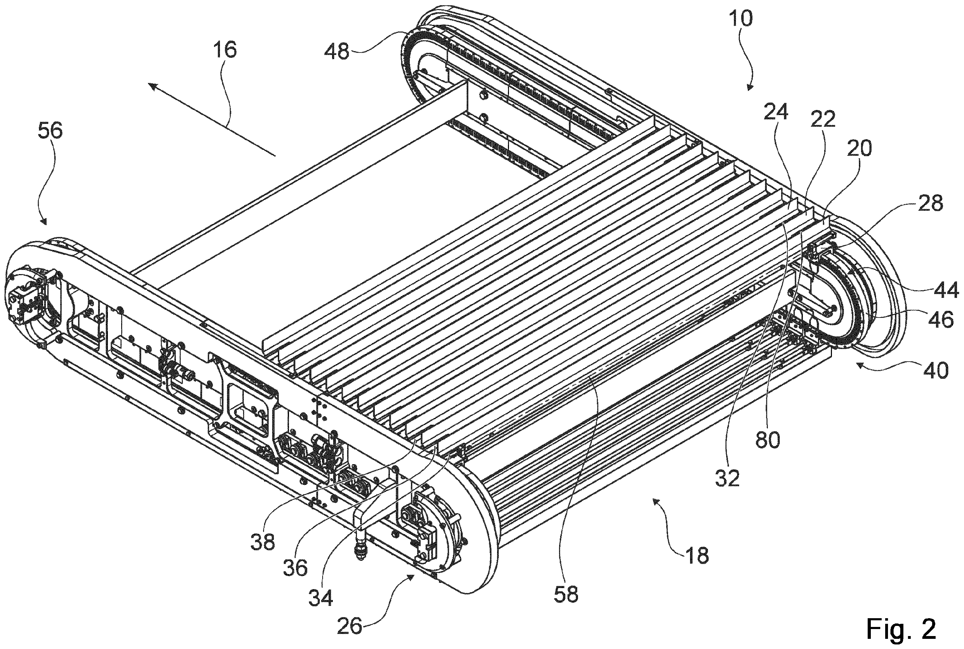

Die Vorrichtung 10 zu einem Ausrichten von, insbesondere mittels der Transportvorrichtung 12 bewegten, Produkten 14, insbesondere zu einer Bildung von quer zur Haupttransportrichtung 16 der Transportvorrichtung 12 verlaufenden Reihen und/oder Gruppen aus den Produkten 14, umfasst zumindest eine Ausrichteinheit 18, die zumindest ein Ausrichtelement 20, 22, 24 aufweist, das zu einem Ausrichten der Produkte 14 in eine, insbesondere entlang der Haupttransportrichtung 16, zwischen zumindest zwei der Produkte 14 vorhandene Lücke einbringbar ist (vgl. Figuren 4 bis 8). Ferner umfasst die Vorrichtung 10 zumindest eine Ausrichtantriebseinheit 26, insbesondere eine Linearantriebseinheit, zumindest zu einem Antrieb des zumindest einen Ausrichtelements 20, 22, 24, die zumindest ein individuell geschwindigkeits- und/oder positionsgeregelt antreibbares Bewegungselement 28, 30, 32 aufweist, an dem das zumindest eine Ausrichtelement 20, 22, 24 angeordnet ist. Das zumindest eine Ausrichtelement 20, 22, 24 ist vorzugsweise als Ausrichtlineal ausgebildet. Das zumindest eine Ausrichtelement 20, 22, 24 ist translatorisch und/oder rotatorisch, insbesondere schwenkbar, beweglich an dem zumindest einen Bewegungselement 28, 30, 32 gelagert. Eine Bewegungsachse 58 des zumindest einen Ausrichtelements 20, 22, 24 verläuft vorzugsweise quer, insbesondere zumindest im Wesentlichen senkrecht, zur Haupttransportrichtung 16. Bevorzugt verläuft die Bewegungsachse 58 des zumindest einen Ausrichtelements 20, 22, 24 bei einer rotatorisch, insbesondere schwenkbar, beweglichen Lagerung des zumindest einen Ausrichtelements 20, 22, 24 an dem zumindest einen Bewegungselement 28, 30, 32 zumindest im Wesentlichen senkrecht zu einer Bewegungsebene des zumindest einen Bewegungselements 28, 30, 32 (vgl. Figuren 2 und 4 bis 8). Bevorzugt wird die Bewegungsebene durch einen Verlauf zumindest einer Führungsbahn 44 einer Führungseinheit 56 der Ausrichtantriebseinheit 26 definiert. Insbesondere umfasst die Führungseinheit 56 zumindest zwei Führungsbahnen 44, die an sich abgewandten Seiten der Vorrichtung 10 angeordnet sind und relativ zueinander beabstandet sind, insbesondere betrachtet entlang einer zumindest im Wesentlichen senkrecht zur Haupttransportrichtung 16 verlaufenden Richtung. Es ist jedoch auch denkbar, dass die Führungseinheit 56 lediglich eine einzelne Führungsbahn 44 aufweist, an der die Bewegungselemente 28, 30, 32, 34, 36, 38 beweglich angeordnet sind, um Ausrichtelemente 20, 22, 24 zumindest relativ zur Transportvorrichtung 12 zu einer Ausrichtung von Produkten 14 zu bewegen. An den Führungsbahnen 44 der Führungseinheit 56 sind jeweils eine Vielzahl an individuell geschwindigkeits- und/oder positionsgeregelt antreibbaren Bewegungselementen 28, 30, 32 der Ausrichtantriebseinheit 26 angeordnet. Vorzugsweise verläuft eine Bewegungsachse 58 des zumindest einen Ausrichtelements 20, 22, 24 bei einer translatorisch beweglichen Lagerung des zumindest einen Ausrichtelements 20, 22, 24 an dem zumindest einen Bewegungselement 28, 30, 32 zumindest im Wesentlichen parallel zur Bewegungsebene des zumindest einen Bewegungselements 28, 30, 32. Alternativ ist das zumindest eine Ausrichtelement 20, 22, 24 zumindest im Wesentlichen unbeweglich an dem zumindest einen Bewegungselement 28, 30, 32 angeordnet (gestrichelt angedeutet in einem Teilbereich der Vorrichtung 10 in Figur 5). Bei der alternativen zumindest im Wesentlichen unbeweglichen Anordnung des zumindest einen Ausrichtelements 20, 22, 24 an dem zumindest einen Bewegungselement 28, 30, 32 umfasst die Ausrichtantriebseinheit 26 vorzugsweise zumindest die, insbesondere endlose, Führungsbahn 44, die zumindest einen Kreisbogen 46, 48 aufweist, wobei das zumindest eine Ausrichtelement 20, 22, 24 in Abhängigkeit von einer Bewegung des zumindest einen Bewegungselements 28, 30, 32 entlang des Kreisbogens 46, 48 in die zwischen zumindest zwei der Produkte 14 vorhandene Lücke einbringbar ist. Insbesondere ist das zumindest eine Ausrichtelement 20, 22, 24 infolge eines Durchfahrens des Kreisbogens 46, 48 der Führungsbahn 44 der Führungseinheit 56 der Ausrichtantriebseinheit 26 in eine Lücke zwischen zumindest zwei Produkten 14 hinein bewegbar oder aus einer Lücke zwischen zumindest zwei Produkten 14 heraus bewegbar.

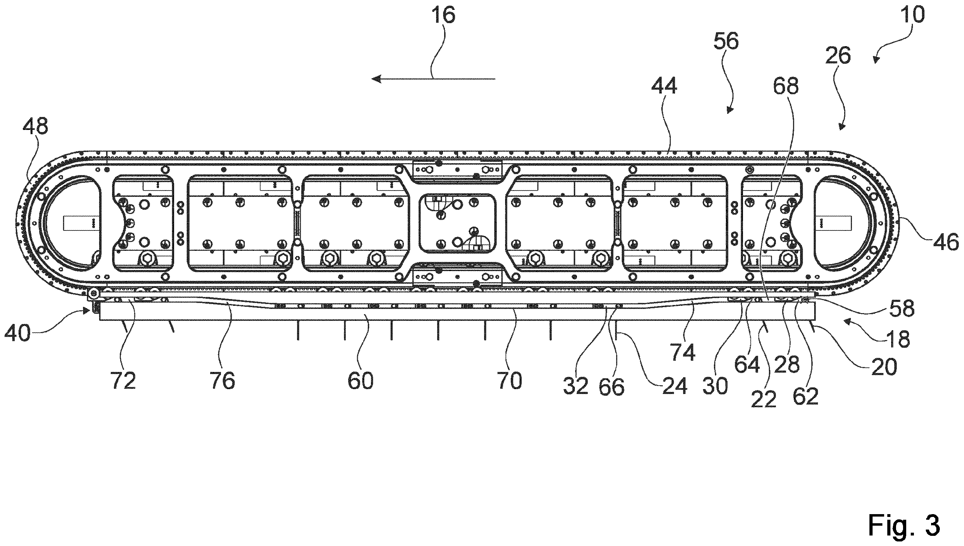

Das zumindest eine Ausrichtelement 20, 22, 24 ist mittels eines Zusammenwirkens mit einer, insbesondere verschieden von einem weiteren Bewegungselement 34, 36, 38 der Ausrichtantriebseinheit 26 ausgebildeten, Aktivierungseinheit 40 der Ausrichteinheit 18 aktiv relativ zu dem zumindest einen Bewegungselement 28, 30, 32 beweglich. Die Aktivierungseinheit 40 kann beispielsweise eine nutförmige Führungsbahn 60 umfassen, die mit zumindest einer am Ausrichtelement 20, 22, 24 angeordneten Nocke 62, 64, 66 zusammenwirkt (vgl. Figur 3), als separate Antriebseinheit ausgebildet sein, wie beispielsweise als Magnetantriebseinheit, als Elektromotoreinheit, als Pneumatikantriebseinheit o. dgl., die an dem zumindest einen Bewegungselement 28, 30, 32 und/oder an der Ausrichtantriebseinheit 26 angeordnet ist, oder als eine andere, einem Fachmann als sinnvoll erscheinende Aktivierungseinheit. Die Aktivierungseinheit 40 ist besonders bevorzugt verschieden von einem Scherengelenkmechanismus ausgebildet, der zu einer Bewegung des Ausrichtelements 20, 22, 24 mit zumindest zwei, insbesondere an einer gemeinsamen Führungsbahn 44 entlang der Haupttransportrichtung 16 hintereinander angeordneten, Bewegungselementen 28, 30, 32, 34, 36, 38 der Ausrichtantriebseinheit 26 zusammenwirkt.

Vorzugsweise umfasst die Aktivierungseinheit 40 zumindest eine nutförmige Führungsbahn 60, die mit zumindest einer an dem zumindest einen Ausrichtelement 20, 22, 24 und/oder an dem zumindest einen Bewegungselement 28, 30, 32 angeordneten Nocke 62, 64, 66 zusammenwirkt. Es ist jedoch auch denkbar, dass die Aktivierungseinheit 40 eine stegförmige Führungsbahn aufweist, die mit zumindest einer an dem zumindest einen Ausrichtelement 20, 22, 24 und/oder an dem zumindest einen Bewegungselement 28, 30, 32 angeordneten Nut zusammenwirkt. Die nutförmige Führungsbahn 60 der Aktivierungseinheit 40 verläuft vorzugsweise zumindest abschnittsweise zumindest im Wesentlichen parallel zur Führungsbahn 44 der Führungseinheit 56. Eine maximale Gesamterstreckung der nutförmigen Führungsbahn 60 der Aktivierungseinheit 40 ist vorzugsweise kleiner als eine maximale Gesamterstreckung, insbesondere als ein maximaler Gesamtverlauf, der Führungsbahn 44 der Führungseinheit 56. Bevorzugt ist die nutförmige Führungsbahn 60 der Aktivierungseinheit 40 an einem geradlinigen Streckenverlauf der Führungsbahn 44 der Führungseinheit 56 angeordnet. Die Führungsbahn 60 der Aktivierungseinheit 40 ist derart an der Führungsbahn 44 der Führungseinheit 56 angeordnet, dass die zumindest eine an dem zumindest einen Ausrichtelement 20, 22, 24 und/oder an dem zumindest einen Bewegungselement 28, 30, 32 angeordnete Nocke 62, 64, 66 der Aktivierungseinheit 40 temporär in Eingriff mit der nutförmigen Führungsbahn 60 der Aktivierungseinheit 40 bringbar ist, insbesondere in Abhängigkeit von einer Position des zumindest einen Ausrichtelements 20, 22, 24 und/oder des zumindest einen Bewegungselements 28, 30, 32 relativ zur Führungsbahn 44 der Führungseinheit 56.

Die nutförmige Führungsbahn 60 der Aktivierungseinheit 40 weist vorzugsweise zumindest einen Einführungsstreckenabschnitt 68 auf, mittels dessen die zumindest eine an dem zumindest einen Ausrichtelement 20, 22, 24 und/oder an dem zumindest einen Bewegungselement 28, 30, 32 angeordnete Nocke 62, 64, 66 der Aktivierungseinheit 40 in die nutförmige Führungsbahn 60 der Aktivierungseinheit 40 einführbar ist, insbesondere infolge einer Bewegung des zumindest einen Ausrichtelements 20, 22, 24 und/oder des zumindest einen Bewegungselements 28, 30, 32 entlang der Führungsbahn 44 der Führungseinheit 56. Die nutförmige Führungsbahn 60 der Aktivierungseinheit 40 weist bevorzugt zumindest einen Ausrichtstreckenabschnitt 70 auf, der dazu vorgesehen ist, infolge eines Zusammenwirkens mit der zumindest einen an dem zumindest einen Ausrichtelement 20, 22, 24 und/oder an dem zumindest einen Bewegungselement 28, 30, 32 angeordneten Nocke 62, 64, 66 der Aktivierungseinheit 40 das zumindest eine Ausrichtelement 20, 22, 24 zu bewegen, insbesondere in eine Lücke zwischen zumindest zwei Produkten 14 einzubringen, und/oder in einer ausgefahrenen Position, in der das zumindest einen Ausrichtelement 20, 22, 24 zu einem Eingriff in eine Lücke zwischen zumindest zwei Produkten 14 vorgesehen ist, zu halten. Die nutförmige Führungsbahn 60 der Aktivierungseinheit 40 weist vorzugsweise zumindest einen Ausführungsstreckenabschnitt 72 auf, mittels dessen die zumindest eine an dem zumindest einen Ausrichtelement 20, 22, 24 und/oder an dem zumindest einen Bewegungselement 28, 30, 32 angeordnete Nocke 62, 64, 66 der Aktivierungseinheit 40 aus der nutförmigen Führungsbahn 60 der Aktivierungseinheit 40 ausführbar ist, insbesondere infolge einer Bewegung des zumindest einen Ausrichtelements 20, 22, 24 und/oder des zumindest einen Bewegungselements 28, 30, 32 entlang der Führungsbahn 44 der Führungseinheit 56. Der Ausführungsstreckenabschnitt 72 ist insbesondere dazu vorgesehen, infolge eines Zusammenwirkens mit der zumindest einen an dem zumindest einen Ausrichtelement 20, 22, 24 und/oder an dem zumindest einen Bewegungselement 28, 30, 32 angeordneten Nocke 62, 64, 66 der Aktivierungseinheit 40 das zumindest eine Ausrichtelement 20, 22, 24 zu bewegen, insbesondere in Richtung einer Ausgangsstellung und/oder in Richtung des zumindest einen Bewegungselements 28, 30, 32, insbesondere zu einer Bewegung weg von der Transportvorrichtung 12.

Der Ausrichtstreckenabschnitt 70 ist vorzugsweise entlang der Haupttransportrichtung 16 zwischen dem Einführungsstreckenabschnitt 68 und dem Ausführungsstreckenabschnitt 72 angeordnet. Der Ausrichtstreckenabschnitt 70 weist entlang einer zumindest im Wesentlichen senkrecht zur Haupttransportrichtung 16 verlaufenden Richtung einen größeren Abstand zur Führungsbahn 44 der Führungseinheit 56 auf als der Einführungsstreckenabschnitt 68 und/oder der Ausführungsstreckenabschnitt 72. Der Ausrichtstreckenabschnitt 70 weist bevorzugt entlang einer zumindest im Wesentlichen senkrecht zur Haupttransportrichtung 16 verlaufenden Richtung einen kleineren Abstand zur Transportvorrichtung 12 auf als der Einführungsstreckenabschnitt 68 und/oder der Ausführungsstreckenabschnitt 72. In einem Übergangsbereich 74, 76 der nutförmigen Führungsbahn 60 der Aktivierungseinheit 40 zwischen dem Ausrichtstreckenabschnitt 70 und dem Einführungsstreckenabschnitt 68 und/oder dem Ausführungsstreckenabschnitt 72 verläuft die nutförmige Führungsbahn 60 der Aktivierungseinheit 40 quer zur Haupttransportrichtung 16, insbesondere zu einer Ermöglichung einer Bewegung des zumindest einen Ausrichtelements 20, 22, 24 in Richtung der Transportvorrichtung 12 im Übergangsbereich 74, 76 zwischen dem Ausrichtstreckenabschnitt 70 und dem Einführungsstreckenabschnitt 68 und/oder zu einer Ermöglichung einer Bewegung des zumindest einen Ausrichtelements 20, 22, 24 weg von der Transportvorrichtung 12 im Übergangsbereich 74, 76 zwischen dem Ausrichtstreckenabschnitt 70 und dem Ausführungsstreckenabschnitt 72. Die nutförmige Führungsbahn 60 der Aktivierungseinheit 40 ist auf einer der Transportvorrichtung 12 zugewandten Seite der Vorrichtung 10, insbesondere der Führungseinheit 56, an der Vorrichtung 10, insbesondere an der Führungseinheit 56, angeordnet. Alternativ oder zusätzlich ist es auch denkbar, dass die Aktivierungseinheit 40 zumindest eine individuell ansteuerbare Antriebseinheit, wie beispielsweise eine Elektromotoreinheit, eine Magnetantriebseinheit o. dgl., aufweist, die dazu vorgesehen ist, das zumindest eine Ausrichtelement 20, 22, 24 relativ zu dem zumindest einen Bewegungselement 28, 30, 32 zu bewegen, insbesondere um das zumindest eine Ausrichtelement 20, 22, 24 in eine Lücke zwischen zumindest zwei Produkten 14 hinein oder hinaus zu bewegen, insbesondere weitestgehend unabhängig von einer Bewegung des zumindest einen Bewegungselements 28, 30, 32 entlang der Führungsbahn 44 der Führungseinheit 56.

Die Vorrichtung 10 umfasst zumindest eine Sensoreinheit 42 zumindest zu einer Erfassung von zumindest einer zwischen zumindest zwei der Produkte 14 vorhandenen Lücke, wobei das zumindest eine Ausrichtelement 20, 22, 24 und/oder das zumindest eine Bewegungselement 28, 30, 32 in Abhängigkeit von der erfassten Lücke bewegbar sind/ist. Vorzugsweise umfasst die Vorrichtung 10 zumindest eine Steuer- und/oder Regeleinheit 78, die dazu vorgesehen ist, eine Bewegung des zumindest einen Bewegungselements 28, 30, 32 und/oder des zumindest einen Ausrichtelements 20, 22, 24 in Abhängigkeit von einer mittels der Sensoreinheit 42 erfassten Lücke zwischen zumindest zwei der Produkte 14 zu steuern und/oder zu regeln. Vorzugsweise ist das zumindest eine Ausrichtelement 20, 22, 24 infolge einer Erfassung einer Lücke zwischen zumindest zwei der Produkte 14 in die Lücke bewegbar. Bevorzugt ist eine Bewegung des zumindest einen Ausrichtelements 20, 22, 24 in eine Lücke bei einem Ausbleiben einer Erfassung einer Lücke zwischen zumindest zwei der Produkte 14 mittels der Steuer- und/oder Regeleinheit 78 unterbindbar.

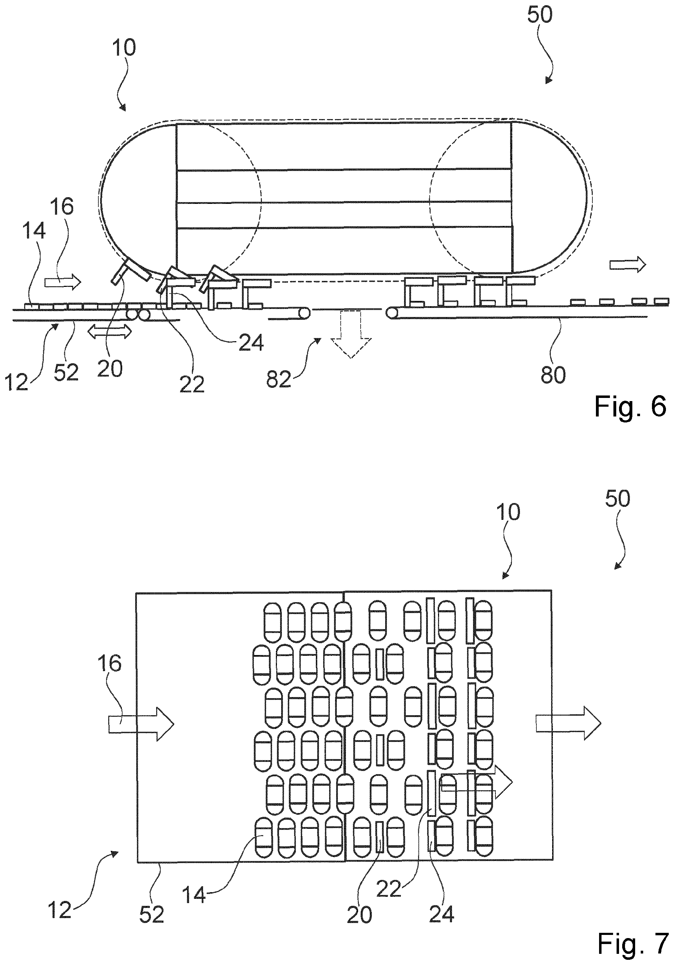

Dem zumindest einen Ausrichtelement 20, 22, 24, insbesondere jedem Ausrichtelement 20, 22, 24 der Ausrichteinheit 18, sind vorzugsweise weniger als vier, insbesondere maximal zwei, Bewegungselemente 28, 30, 32, 34, 36, 38 der Ausrichtantriebseinheit 26 zugeordnet. Bevorzugt ist das zumindest eine Ausrichtelement 20, 22, 24 mit zumindest einem Ende mit dem zumindest einen, insbesondere nur mit dem, Bewegungselement 28, 30, 32 verbunden, insbesondere an dem zumindest einen Bewegungselement 28, 30, 32 beweglich gelagert. insbesondere ist das zumindest eine Ausrichtelement 20, 22, 24 mit zumindest einem weiteren Ende mit zumindest einem weiteren, insbesondere nur mit dem weiteren, Bewegungselement 34, 36, 38 verbunden, insbesondere an dem zumindest einen Bewegungselement 28, 30, 32 beweglich gelagert. Das zumindest eine Bewegungselement 28, 30, 32 und das zumindest eine weitere Bewegungselement 34, 36, 38 bilden zusammen ein Bewegungselementpaar der Ausrichtantriebseinheit 26, mittels dessen das zumindest eine Ausrichtelement 20, 22, 24 entlang der Führungsbahnen 44 der Führungseinheit 56 bewegbar ist, insbesondere individuell geschwindigkeits- und/oder positionsgeregelt bewegbar. Das zumindest eine Ausrichtelement 20, 22, 24 ist vorzugsweise translatorisch und/oder rotatorisch, insbesondere schwenkbar, beweglich an dem zumindest einen Bewegungselement 28, 30, 32 und/oder an dem zumindest einen weiteren Bewegungselement 34, 36, 38 gelagert. Insbesondere ist das zumindest eine Ausrichtelement 20, 22, 24 translatorisch und/oder rotatorisch, insbesondere schwenkbar, beweglich an dem Bewegungselementpaar der Ausrichtantriebseinheit 26 gelagert. Vorzugsweise umfasst die Ausrichteinheit 18 eine Vielzahl an Ausrichtelementen 20, 22, 24, die jeweils beweglich an einem Bewegungselementpaar der Ausrichtantriebseinheit 26 gelagert sind (vgl. Figuren 6 und 7). Die Ausrichtantriebseinheit 26 umfasst insbesondere eine Vielzahl an Bewegungselementen 28, 30, 32 und/oder weiteren Bewegungselementen 34, 36, 38 zu einer Bewegung der Vielzahl an Ausrichtelementen 20, 22, 24 entlang der Führungsbahnen 44. Besonders bevorzugt bildet eines der Bewegungselemente 28, 30, 32 und eines der weiteren Bewegungselemente 34, 36, 38 jeweils ein Bewegungselementpaar der Ausrichtantriebseinheit 26 zu einer Bewegung eines einzelnen Ausrichtelements 20, 22, 24 entlang der Führungsbahnen 44 aus. Vorzugsweise ist an jeder der Führungsbahnen 44 ein Linearmotorsystem der Ausrichtantriebseinheit 26 zu einer Bewegung der Bewegungselemente 28, 30, 32, 34, 36, 38 angeordnet. Die Linearmotorsysteme weisen vorzugsweise eine, einem Fachmann bereits bekannte Ausgestaltung auf.

Eine Bewegung des zumindest einen Bewegungselements 28, 30, 32 und des zumindest einen weiteren Bewegungselements 34, 36, 38 entlang der Führungsbahnen 44 ist mittels der Steuer- und/oder Regeleinheit 78 steuer- und/oder regelbar, insbesondere synchronisierbar. Das zumindest eine Bewegungselement 28, 30, 32 ist an einer der zwei Führungsbahnen 44 beweglich gelagert, insbesondere individuell geschwindigkeits- und/oder positionsgeregelt antreibbar an einer der zwei Führungsbahnen 44 angeordnet. Das zumindest eine weitere Bewegungselement 34, 36, 38 ist an einer weiteren der zwei Führungsbahnen 44 beweglich gelagert, insbesondere individuell geschwindigkeits- und/oder positionsgeregelt antreibbar an einer weiteren der zwei Führungsbahnen 44 angeordnet. Die zwei Führungsbahnen 44 sind zumindest im Wesentlichen parallel zueinander angeordnet. Vorzugsweise verlaufen die durch einen Verlauf der Führungsbahnen 44 definierten Bewegungsebenen der Bewegungselement 28, 30, 32, 34, 36, 38 zumindest im Wesentlichen parallel zur Haupttransportrichtung 16. Bevorzugt verlaufen die durch einen Verlauf der Führungsbahnen 44 definierten Bewegungsebenen der Bewegungselement 28, 30, 32, 34, 36, 38 zumindest im Wesentlichen senkrecht zu einer Transportfläche der Transportvorrichtung 12. Die zwei Führungsbahnen 44 sind bevorzugt zumindest mittels des zumindest einen Ausrichtelements 20, 22, 24 miteinander verbunden. Das zumindest eine Ausrichtelement 20, 22, 24 überspannt vorzugsweise zumindest teilweise die Transportvorrichtung 12, insbesondere entlang einer zumindest im Wesentlichen senkrecht zur Haupttransportrichtung 16 und/oder zumindest im Wesentlichen senkrecht zur Bewegungsebene des zumindest einen Bewegungselements 28, 30, 32 und/oder des zumindest einen weiteren Bewegungselements 34, 36, 38 verlaufenden Richtung.

Alternativ oder zusätzlich ist es denkbar, dass die Ausrichteinheit 18 eine Vielzahl an Ausrichtelementen 20, 22, 24 aufweist, die beweglich an dem zumindest einen Bewegungselement 28, 30, 32 angeordnet sind (vgl. Figur 7). Es ist denkbar, dass jedem Bewegungselementpaar der Ausrichtantriebseinheit 26 eine Vielzahl an Ausrichtelementen 20, 22, 24 zugeordnet ist, dass eine Anordnung von einem einzelnen Ausrichtelement 20, 22, 24 an einem Bewegungselementpaar der Ausrichtantriebseinheit 26 und eine Anordnung einer Vielzahl an Ausrichtelementen 20, 22, 24 an einem Bewegungselementpaar der Ausrichtantriebseinheit 26 gleichmäßig verteilt oder ungleichmäßig verteilt, wie beispielsweise abwechselnd, chaotisch o. dgl., an der Führungseinheit 56 erfolgt oder dass jedem Bewegungselementpaar der Ausrichtantriebseinheit 26 nur ein einzelnes Ausrichtelementen 20, 22, 24 zugeordnet ist. Bei einer Anordnung einer Vielzahl an Ausrichtelementen 20, 22, 24 an einem Bewegungselementpaar der Ausrichtantriebseinheit 26 ist es denkbar, dass die an dem zumindest einen Bewegungselement 28, 30, 32 angeordneten Ausrichtelemente 20, 22, 24 einzeln und/oder gemeinsam bewegbar sind. Es ist denkbar, dass die Aktivierungseinheit 40 alternativ oder zusätzlich zur nutförmigen Führungsbahn 60 und den Nocken 62, 64, 66 zumindest eine Einzelantriebseinheit aufweist, die zu einem individuellen Antrieb jedes einzelnen Ausrichtelements 20, 22, 24 der Vielzahl an Ausrichtelementen 20, 22, 24, die an einem Bewegungselementpaar der Ausrichtantriebseinheit 26 angeordnet ist, vorgesehen ist. Es ist jedoch auch denkbar, dass Aktivierungseinheit 40 alternativ oder zusätzlich zur nutförmigen Führungsbahn 60 und den Nocken 62, 64, 66 zumindest eine Einzelantriebseinheit aufweist, die zu einem individuellen Antrieb von Gruppen von Ausrichtelementen 20, 22, 24 der Vielzahl an Ausrichtelementen 20, 22, 24, die an einem Bewegungselementpaar der Ausrichtantriebseinheit 26 angeordnet ist, vorgesehen ist. Bei einer Anordnung einer Vielzahl an Ausrichtelementen 20, 22, 24 an einem Bewegungselementpaar der Ausrichtantriebseinheit 26 ist es denkbar, dass die Ausrichtelemente 20, 22, 24 entlang einer zumindest im Wesentlichen parallel zur Haupttransportrichtung 16 hintereinander angeordnet sind und/oder entlang einer quer, insbesondere zumindest im Wesentlichen senkrecht, zur Haupttransportrichtung 16 hintereinander, insbesondere nebeneinander, angeordnet sind. Weitere, einem Fachmann als sinnvoll erscheinende Ausgestaltungen und/oder Anordnungen einer Vielzahl an Ausrichtelementen 20, 22, 24 an dem zumindest einen Bewegungselement 28, 30,32 und/oder an dem zumindest einen weiteren Bewegungselement 34, 36, 38, die insbesondere zusammen ein Bewegungselementpaar der Ausrichtantriebseinheit 26 bilden, sind ebenfalls denkbar.

Bei einem Verfahren zu einem Ausrichten von Produkten 14, insbesondere zu einer Bildung von quer zur Haupttransportrichtung 16 verlaufenden Reihen und/oder Gruppen aus Produkten 14, mittels der Vorrichtung 10 wird in zumindest einem Verfahrensschritt zu einer Bewegung des zumindest einen Ausrichtelements 20, 22, 24 der Ausrichteinheit 18 in eine zwischen zumindest zwei der Produkte 14 vorhandene Lücke das zumindest eine Ausrichtelement 20, 22, 24 mittels eines Zusammenwirkens mit einer, insbesondere verschieden von dem zumindest einen weiteren Bewegungselement 34, 36, 38 der Ausrichtantriebseinheit 26 ausgebildeten, Aktivierungseinheit 40 aktiv relativ zu dem zumindest einen Bewegungselement 28, 30, 32 der Ausrichtantriebseinheit 26 bewegt (vgl. Figuren 4 bis 8) oder das zumindest eine Ausrichtelement 20, 22, 24 wird in Abhängigkeit von einer Bewegung des zumindest einen Bewegungselements 28, 30, 32 und/oder des zumindest einen weiteren Bewegungselements 34, 36, 38, insbesondere zumindest eines Bewegungselementpaars der Ausrichtantriebseinheit 26, entlang des Kreisbogens 46 der Führungsbahn 44 der Ausrichtantriebseinheit 26 in die zwischen zumindest zwei der Produkte 14 vorhandene Lücke bewegt, insbesondere bei einer alternativen Ausgestaltung, in der das zumindest eine Ausrichtelement 20, 22, 24 zumindest im Wesentlichen unbeweglich an dem zumindest einen Bewegungselements 28, 30, 32 und/oder dem zumindest einen weiteren Bewegungselement 34, 36, 38, insbesondere an zumindest einem Bewegungselementpaar der Ausrichtantriebseinheit 26 angeordnet ist (vgl. Figur 5). Vorzugsweise wird in zumindest einem Verfahrensschritt mittels der zumindest einen Sensoreinheit 42 die zumindest eine zwischen zumindest zwei der Produkte 14 vorhandene Lücke erfasst. In zumindest einem Verfahrensschritt werden/wird das zumindest eine Ausrichtelement 20, 22, 24 und/oder das zumindest eine Bewegungselement 28, 30, 32, insbesondere das zumindest eine Bewegungselementpaar der Ausrichtantriebseinheit 26, in Abhängigkeit von der erfassten Lücke bewegt.

Figur 4 zeigt eine mögliche Reihenbildungsfunktion aus einem ungeordneten Produktteppich aus Produkten 14 mittels der Vorrichtung 10. In zumindest einem Verfahrensschritt werden die ungeordneten Produkte 14 mittels der Zufuhreinheit 52 entlang der Haupttransportrichtung 16 bewegt, insbesondere der Vorrichtung 10 zugeführt. In zumindest einem Verfahrensschritt werden die Produkte 14 mittels des zumindest einen Ausrichtelements 20, 22, 24 ausgerichtet, wobei eine Bewegung der Produkte 14 entlang der Haupttransportrichtung 16 durch das zumindest eine Ausrichtelement 20, 22, 24 und/oder durch die Zufuhreinheit 52 erfolgen kann. Die ausgerichteten Produkte 14 werden in zumindest einem Verfahrensschritt einer Reversiertransporteinheit 80 der Transportvorrichtung 12 und/oder der Abfuhreinheit 54, insbesondere zumindest einer als Querabfuhreinheit ausgebildeten Abfuhreinheit 54, zugeführt. Es ist auch denkbar, dass die Transportvorrichtung 12 eine von eins abweichende Anzahl an Abfuhreinheiten 54 aufweist, die als Querabfuhreinheit ausgebildet sind oder eine andere Ausgestaltung aufweisen. In zumindest einem Verfahrensschritt werden die Produkte 14 mittels der Abfuhreinheit 54 von der Vorrichtung 10 abgeführt und/oder einem Verpackungsprozess o. dgl. zugeführt. Die Reversiertransporteinheit 80 ist insbesondere als Puffer vorgesehen, mittels dessen ausgerichtete, insbesondere in Reihen und/oder Gruppen ausgerichtete Produkte 14, bis zu einem Weitertransport zwischenspeicherbar.

Figur 5 zeigt eine weitere mögliche Reihenbildungsfunktion aus einem ungeordneten Produktteppich aus Produkten 14 mittels der Vorrichtung 10, wobei in zumindest einem Verfahrensschritt die ausgerichteten Produkte 14 mittels des zumindest einen Ausrichtelements 20, 22, 24 entgegen der Haupttransportrichtung 16 bewegt werden, insbesondere zu einer Verschiebung von ausgerichteten Produkten 14 von der Reversiertransporteinheit 80 zur Abfuhreinheit 54 und/oder von einer der Abfuhreinheiten 54 zur weiteren der Abfuhreinheiten 54.

Alternativ zu den in den Figuren 4 und 5 gezeigten und beispielhaft beschriebenen möglichen Reihenbildungsfunktionen mittels der Vorrichtung 10 ist es denkbar, dass die die Produkte 14 mittels einer Plattenzufuhreinheit (hier nicht näher dargestellt) der Transportvorrichtung 12 zugeführt werden, insbesondere alternativ zu der als beispielswiese Transportband ausgebildeten Zufuhreinheit 52. Die Plattenzufuhreinheit könnte vorzugsweise dazu vorgesehen sein, Produkte 14, insbesondere in Form von gegossenen Schokoladenprodukten, zumindest teilweise ausgerichtet, insbesondere bedingt durch eine Gießfertigung der gegossenen Schokoladenprodukten in Gießformen, der Vorrichtung 10 zuzuführen. Bevorzugt ist die Plattenzufuhreinheit dazu vorgesehen, die Produkte 14 der Vorrichtung 10 entlang einer quer, insbesondere zumindest im Wesentlichen senkrecht, zur Haupttransportrichtung 16 verlaufenden Richtung zuzuführen, insbesondere entlang einer zumindest im Wesentlichen senkrecht zu einer Bodenstandfläche der Transportvorrichtung 12 verlaufenden Richtung. Die Vorrichtung 10 kann die Produkte 14 mittels der Ausrichtelemente 20, 22, 24 von der Plattenzufuhreinheit übernehmen, ausrichten und zumindest einer der Abfuhreinheiten 54 oder der Reversiertransporteinheit 80 zuführen. Denkbar wäre auch, dass die Produkte 14 nach einer Anlieferung durch die Zufuhreinheit 52 mittels der Vorrichtung 10 ausgerichtet werden und zumindest einer Plattenzufuhreinheit zu einem Abtransport zugeführt werden (Plattenzfuhreinheit könnte beispielsweise an der in den Figuren 4 und 5 dargestellten Position der Abfuhreinheiten 54 angeordnet sein). Denkbar ist auch eine Pufferung von Produkten 14 mittels der Plattenzufuhreinheit, die alternativ zu den Abfuhreinheiten 54 vorgesehen sein könnte. Zudem wäre auch denkbar, dass Produkte mittels der Plattenzufuhreinheit zusätzlich zur Zufuhreinheit 52 in einen Transportprozess eingeschleust werden. Weitere, einem Fachmann als sinnvoll erscheinende Ausgestaltungen der Transportvorrichtung 12 mit oder ohne Plattenzufuhreinheit sind ebenfalls denkbar.

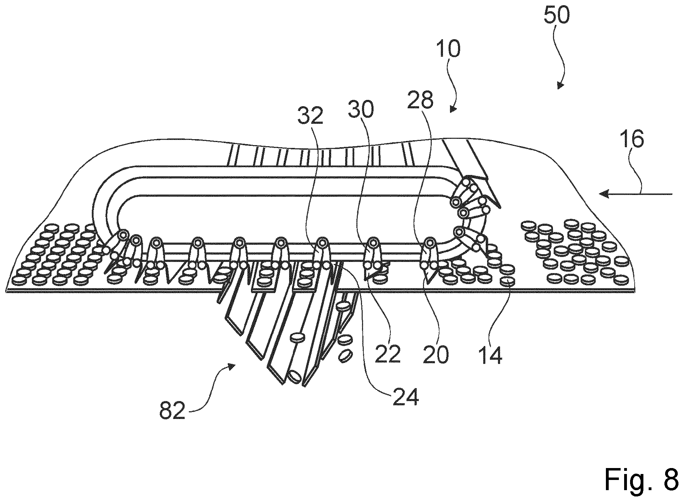

Figuren 6 und 8 zeigen eine weitere mögliche Reihenbildungsfunktion aus einem ungeordneten Produktteppich aus Produkten 14 mittels der Vorrichtung 10, wobei in zumindest einem Verfahrensschritt unausgerichtete Produkte 14 oder schadhafte Produkte 14 mittels der Vorrichtung 10 und/oder der Transportvorrichtung 12 aussortierbar sind, insbesondere infolge einer Zuführung zu einer Auswurfeinheit 82 der Transportvorrichtung 12, die vorzugsweise unterhalb der Vorrichtung 10 angeordnet ist.

Figur 7 zeigt eine weitere mögliche Reihenbildungsfunktion aus einem ungeordneten Produktteppich aus Produkten 14 mittels der Vorrichtung 10, wobei in zumindest einem Verfahrensschritt bei einer Anordnung einer Vielzahl von Ausrichtelementen 20, 22, 24 an einem einzelnen Bewegungselementpaar der Ausrichtantriebseinheit 26 eine Ausrichtung von einzelnen in einer Reihe angeordneter Produkte 14 zu weiteren in einer Reihe angeordneter Produkte 14 erfolgt. Die einzelnen Ausrichtelemente 20, 22, 24, die an einem einzelnen Bewegungselementpaar der Ausrichtantriebseinheit 26 angeordnet sind, sind individuell relativ zueinander bewegbar.

Hinsichtlich weiterer Verfahrensschritte des Verfahrens zu Verfahren zu einem Ausrichten von Produkten 14 mittels der Vorrichtung 10 darf auf die vorhergehende Beschreibung der Vorrichtung 10 verwiesen werden, da diese Beschreibung analog auch auf das Verfahren zu lesen ist und somit alle Merkmale hinsichtlich der Vorrichtung 10 auch in Bezug auf das Verfahren zu einem Ausrichten von Produkten 14 mittels der Vorrichtung 10 als offenbart gelten und umgekehrt.

## Patentansprüche

1. Vorrichtung zu einem Ausrichten von, insbesondere mittels einer Transportvorrichtung (12) bewegten, Produkten (14), insbesondere zu einer Bildung von quer zu einer Haupttransportrichtung (16) der Transportvorrichtung (12) verlaufenden Reihen und/oder Gruppen aus den Produkten (14), mit zumindest einer Ausrichteinheit (18), die zumindest ein Ausrichtelement (20, 22, 24) aufweist, das zu einem Ausrichten der Produkte (14) in eine, insbesondere entlang der Haupttransportrichtung (16), zwischen zumindest zwei der Produkte (14) vorhandene Lücke einbringbar ist, mit zumindest einer als Linearmotorsystem ausgebildeten Ausrichtantriebseinheit (26) zumindest zu einem Antrieb des zumindest einen Ausrichtelements (20, 22, 24), die zumindest ein individuell geschwindigkeits- und/oder positionsgeregelt antreibbares Bewegungselement (28, 30, 32) aufweist, an dem das zumindest eine Ausrichtelement (20, 22, 24) angeordnet ist, und mit zumindest einer Sensoreinheit (42) zumindest zu einer Erfassung von zumindest einer zwischen zumindest zwei der Produkte (14) vorhandenen Lücke, wobei das zumindest eine Bewegungselement (28, 30, 32) in Abhängigkeit von der erfassten Lücke bewegbar ist, **dadurch gekennzeichnet, dass** das zumindest eine Ausrichtelement (20, 22, 24) zumindest im Wesentlichen unbeweglich an dem zumindest einen Bewegungselement (28, 30, 32) angeordnet ist, wobei die Ausrichtantriebseinheit (26) zumindest eine, insbesondere endlose, Führungsbahn (44) aufweist, die zumindest einen Kreisbogen (46, 48) aufweist, wobei das zumindest eine Ausrichtelement (20, 22, 24) in Abhängigkeit von einer Bewegung des zumindest einen Bewegungselements (28, 30, 32) entlang des Kreisbogens (46, 48) in die zwischen zumindest zwei der Produkte (14) vorhandene Lücke einbringbar ist.

2. Vorrichtung nach Anspruch 1, **dadurch gekennzeichnet, dass** dem zumindest einen Ausrichtelement (20, 22, 24), insbesondere jedem Ausrichtelement (20, 22, 24) der Ausrichteinheit (18), weniger als vier, insbesondere maximal zwei, Bewegungselemente (28, 30, 32, 34, 36, 38) der Ausrichtantriebseinheit (26) zugeordnet sind.

3. Verfahren zu einem Ausrichten von Produkten (14), insbesondere zu einer Bildung von quer zu einer Haupttransportrichtung (16) verlaufenden Reihen und/oder Gruppen aus Produkten (14),mittels einer Vorrichtung nach einem der vorhergehenden Ansprüche, wobei in zumindest einem Verfahrensschritt mittels der zumindest einen Sensoreinheit (42) die zumindest eine zwischen zumindest zwei der Produkte (14) vorhandene Lücke erfasst wird, wobei in zumindest einem Verfahrensschritt das zumindest eine Bewegungselement (28, 30, 32) in Abhängigkeit von der erfassten Lücke bewegt wird, **dadurch gekennzeichnet, dass** in zumindest einem Verfahrensschritt zu einer Bewegung des zumindest einen Ausrichtelements (20, 22, 24) der Ausrichteinheit (18) in die zwischen zumindest zwei der Produkte (14) vorhandene Lücke das zumindest eine Ausrichtelement (20, 22, 24) in Abhängigkeit von einer Bewegung des zumindest einen Bewegungselements (28, 30, 32) entlang des Kreisbogens (46, 48) der Führungsbahn (44) der Ausrichtantriebseinheit (26) in die zwischen zumindest zwei der Produkte (14) vorhandene Lücke bewegt wird.
